Europäisches Patentamt

**European Patent Office**

**Office européen des brevets**

(19)

(11) Publication number: **0 195 352**
**A1**

(12) # EUROPEAN PATENT APPLICATION

(21) Application number: **86103237.3**

(22) Date of filing: **11.03.86**

(51) Int. Cl.⁴: **B 65 B 55/20**
**B 65 D 81/12**

(30) Priority: **19.03.85 DK 1237/85**

(43) Date of publication of application:
**24.09.86 Bulletin 86/39**

(84) Designated Contracting States:
**AT CH DE FR GB IT LI NL SE**

(71) Applicant: **Colon Systempack A/S**
**Banemarksvej 38**
**DK-2605 Brondby(DK)**

(72) Inventor: **Ravn, Erik**
**Hojtoften 157**
**DK-2530 Tastrup(DK)**

(72) Inventor: **Borg, Steffen**
**Sandbjergvej 8**
**DK-3660 Stenlose(DK)**

(74) Representative: **Patentanwälte Dipl.-Ing. Bodo Thielking**
**Dipl.-Ing. Otto Elbertzhagen**
**Gadderbaumer Strasse 20**
**D-4800 Bielefeld 1(DE)**

(54) **A method of forming a shaped body from particles of foamed plastic.**

(57) A shaped body made from foamed plastic for use as shock absorbing and insulating filler in packagings is formed from a plastic mass consisting of preferably spherical foamed plastic particles, the surfaces of which are coated with an adhesive. The adhesive is preferably of the "hot-melt" type which may be applied to the plastic particles by atomization in a heated condition. The plastic mass is introduced in a plastic bag or another case with flexible walls and then shaped in any desired manner before the adhesive sets or hardens.

EP 0 195 352 A1

# A METHOD OF FORMING A SHAPED BODY FROM PARTICLES OF FOAMED PLASTIC

The invention relates to a method of forming a shaped body from a large number of separate particles of foamed plastic.

For use in connection with packaging of shock sensitive objects it is known to use shaped bodies made from foamed plastic and defining a cavity of a shape corresponding to the shape of the object to be packaged, and serving to receive the object. As an example, such shaped bodies are formed by heating expandable, thermoplastic plastic particles and bringing them to expand in a suitable mould whereby the expanded particles melt together into a unit to form the desired shaped body.

This known method of forming such shock absorbing and/or insulating shaped bodies is acceptable when a very large number of identical objects are to be packaged, but in the case where relatively few objects of the same shape are to be packaged, and where, perhaps, many different kinds of objects may be involved, the said known method of forming shaped bodies for use in packaging the objects is less advantageous, as the costs of producing and stocking the moulds to be used for moulding the shaped bodies will be disproportionately high.

The published British patent application No. 2,103,567 discloses a packaging method in which foamed plastic particles of which at least some have been coated with a heat activatable adhesive, are introduced into the interspace between a container and an object to be packaged which is placed therein. The adhesive may then be activated by blowing warm air into the packaging. As an alternative possibility it is proposed to heat the plastic particles and thus activate the adhesive, before the plastic particles are placed in the container, and then to press the object to be packaged into the plastic mass to shape it before the adhesive sets.

The latter known method of packaging is well suited for packaging objects which are different, or similar objects which only occur in very small numbers. As the adhesive is activated while the plastic mass is in the container or the packaging, the plastic particles coated with adhesive will not only bond to each other, but also tend to bond to the inner side of the container and to the object to be packaged. The effect is, partly that the plastic particles will bond to the inner side of the container or the packaging so that it becomes difficult to re-use the same, and partly that the packaged object will adhere to the plastic mass and thus be difficult to remove from the packaging, unless the object is wrapped in paper or the like before packaging, or some form of releasing agent is applied to the object.

The present invention provides a method in which the said disadvantage is avoided, and the method according to the invention is of the type in which the surfaces of the plastic particles are coated with an adhesive in an amount sufficient for mutual bonding of the particles, whereupon they are placed in an interspace defined between the inner side of a packaging and an object to be packaged and arranged therein, and shaped in correspondence with the outer surface of the object before the particles are finally bonded by the adhesive, and the method according to the invention is characterized in that the particles with the adhesive are introduced in a bag or another case with flexible walls, and that the shaping of the mass constituted by the particles and the adhesive is effected by deformation of the bag and the mass contained therein.

By the method according to the invention it is possible to obtain a simple individual adaptation of the shape of the plastic mass to the shape of the object to be packaged without any risk that the plastic mass adheres to the object or the outer packaging. Whereas the use of the above known method would necessitate a substantially total filling out of the interspace between the packaging and the object placed therein, the method according to the invention renders it possible, if desired, to fill only selected parts of the interspace with the shaped bodies, which may involve a considerable saving of material.

The bag or case may be arranged in the interspace between the packaging and the object in an empty condition whereupon the plastic particles may be blown into the bag arranged *in situ*. However, it is preferred to introduce the plastic particles in the bag or case before the bag or case with contents is arranged in the packaging, and the bag or case is then given the desired shape by pressing the bag and the object to be packaged against each other.

The adhesive used may be of a type containing solvents which have to evaporate before the adhesive can set, and the bag or case must then be permeable for the solvent in its gaseous form.

However, in the method according to the invention, it is preferred to use a solvent-free thermoplastic adhesive of the type which melts when heated and sets when cooled, for example a so-called "hot-melt". The bag or case may then be completely gas tight, if desired. These "hot-melts" are well-known in the cardboard packaging industry and for use in closing cardboard packagings, and various apparatus exist for applying such

0195352

"hot-melts" in a heated condition. Normally, these adhesives are applied at a temperature of about 170°C, and they may set, for example when they have been cooled to a temperature of about 70-80°C.

The plastic particles used may be of any type of foamed plastic, but preferably polystyrene is used. The plastic particles may also have any shape, and in principle they may consist of disintegrated or pulverized foam plastic in which the particles have a size and shape which gives the plastic mass the required plasticity before the adhesive has set. The greatest plasticity is, however, obtained by the use of substantially spherical plastic particles of a suitable size. These spherical plastic particles may suitably have a diameter of 1-1 1/2 mm.

The adhesive may be applied to the plastic particles in any suitable manner and at any suitable time during moulding. In a preferred embodiment, the foamed particles are passed from a reservoir through a guiding passage into the bag or case, and the adhesive may then be atomized into the guiding passage at a suitable location or place thereof. The free end of the guiding passage, which may, for example, be a flexible hose or a flexible tube, may then be passed to the opening of the bag or case in which the plastic mass is to be moulded and shaped. If the injection of adhesive into the guiding passage takes place at a substantial distance from the free end of the guiding passage, it may be necessary to arrange heating means in the guiding passage downstream of the location of atomization, so that the temperature of the adhesive may be kept at a desired level. In other cases, where it is desired that the adhesive should set or harden immediately upon the plastic mass leaving the guiding passage, the passage may be provided with corresponding cooling means.

Shaped bodies produced by the method according to the invention may be disintegrated after use, a new adhesive may be applied, and the material may be re-used.

KWF/KWF/44/PA25451A/03.03.86

CLAIMS

1. A method of forming a shaped body from a large number of separate particles of foamed plastic, the surfaces of the plastic particles being coated with an adhesive in an amount sufficient for mutual bonding of the particles, whereupon the particles are arranged in an interspace defined between the inner side of a packaging and an object to be packaged and placed therein, and shaped in correspondence with the outer surface of the object before the particles are finally bonded by the adhesive, characterized in that the particles with the adhesive are introduced in a bag or another case with flexible walls, and that the shaping of the mass constituted by the particles and the adhesive is effected by deformation of the bag and the mass contained therein.

2. A method according to claim 1, characterized in using a solvent-free thermoplastic adhesive of the type which melts when heated and sets when cooled, for example a so-called "hot-melt".

3. A method according to claim 1 or 2, characterized in that the plastic particles are made from polystyrene.

4. A method according to any of the claims 1-3, characterized in that each of the plastic particles has a substantially spherical shape.

5. A method according to claim 4, characterized in that the substantially spherical plastic particles have a diameter of 1-1 1/2 mm.

6. A method according to any of the claims 1-5, characterized in that the foamed plastic particles are passed from a reservoir through a guiding passage into the bag or case, and that the adhesive is atomized into the guiding passage at a suitable location thereof.

7. A method according to claim 6, characterized in the use of a guiding passage, in which heating and/or cooling means are arranged downstream of the location of atomization, and that the temperature of the adhesive is adjusted by the aid of these means.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-4 493 877 (J.S. BURNETT) *Column 3, line 39 - column 4, line 46* | 1-7 | B 65 B 55/20 B 65 D 81/12 |
| A,E | EP-A2-162 306 (THE DOW CHEMICAL COMPANY) | 1-7 | |
| A,D | GB-A-2 103 567 (FIBRE DRUMS LIMITED) | 1-7 | |
| A | US-A-3 292 859 (F.L. LONDON) | 1-7 | |
| A | US-A-3 773 876 (K.F. RATH ET AL) | | |

**TECHNICAL FIELDS SEARCHED (Int Cl 4)**

B 65 B

B 65 D

B 29 C

C 08 J

The present search report has been drawn up for all claims

| Place of search | Date of completion of the search | Examiner |
|---|---|---|
| STOCKHOLM | 26-05-1986 | JÖNSSON H.C. |